# EUROPÄISCHE PATENTSCHRIFT

(11) **EP 4 286 614 B1**
(45) Veröffentlichungstag und Bekanntmachung des Hinweises auf die Patenterteilung: **08.04.2026**
(21) Anmeldenummer: 22177011.8
(22) Anmeldetag: 02.06.2022
(51) Int. Cl.: E03C 1/04, F16K 11/16, F16K 11/00, F16K 35/14, E03C 1/05, E03C 1/10

(54) **SANITÄRARMATUR MIT ABSPERRVENTILEN**
SANITARY FITTING HAVING A CUT-OFF VALVE
ROBINETTERIE SANITAIRE POURVUE DE ROBINETS D'ARRÊT

(43) Veröffentlichungstag der Anmeldung: 06.12.2023
(73) Patentinhaber: Ideal Standard International NV, 1930 Zaventem (BE)
(72) Erfinder: Conway, Graham, Staffs WS11 7YJ (GB)
(74) Vertreter: Feucker, Max Martin

(56) Entgegenhaltungen:
- EP-A2- 0 834 691
- EP-A2- 3 309 307
- WO-A1-91/08532
- JP-A- 2019 065 528
- JP-A- H06 235 468

## Beschreibung

Die vorliegende Erfindung betrifft eine Sanitärarmatur mit einem Kaltwasseranschluss, einem Heißwasseranschluss, einer Mischeinheit, einer von dem Kaltwasseranschluss zu der Mischeinheit führenden Kaltwasserleitung, einer von dem Heißwasseranschluss zu der Mischeinheit führenden Heißwasserleitung, einem in der Kaltwasserleitung angeordneten ersten Ventil und einem in der Heißwasserleitung angeordneten zweiten Ventil.

Eine Sanitärarmatur mit den vorgenannten Merkmalen ist aus EP 0 501 953 B1 bekannt. Die in der Kaltwasserleitung und der Heißwasserleitung angeordneten Ventile dienen hierbei zur Absperrung und Mengensteuerung des zu der Mischeinheit fließenden Heiß- und Kaltwassers. Die Ventile sind über eine Spindel gleichzeitig betätigbar. Sanitärarmaturen mit den Merkmalen des Oberbegriffs des Anspruchs 1 sind aus JP H06 235468 A, JP 2019 065528 A1 und EP 3 309 307 A2 bekannt.

Aufgabe der vorliegenden Erfindung ist es, eine alternativ ausgestaltete Sanitärarmatur bereitzustellen.

Diese Aufgabe wird gelöst durch eine Sanitärarmatur mit den Merkmalen des unabhängigen Anspruchs. Vorteilhafte Weiterbildungen der Sanitärarmatur sind in den abhängigen Ansprüchen und in der Beschreibung angegeben, wobei einzelne Merkmale der vorteilhaften Weiterbildungen in technisch sinnvoller Weise miteinander kombinierbar sind.

Gelöst wird die Aufgabe insbesondere durch eine Sanitärarmatur mit den eingangs genannten Merkmalen, bei der sowohl das erste Ventil als auch das zweite Ventil ausschließlich zwischen einer Öffnungsstellung und einer Schließstellung umschaltbar ist.

Mit anderen Worten: Die Erfindung sieht in ihrem Grundgedanken vor, dass die in der Heißwasserleitung und der Kaltwasserleitung angeordneten Ventile ausschließlich zum Absperren und Freigeben von Kalt- bzw. Heißwasser ausgebildet sind und dass keine Mengeneinstellung mit den in der Heißwasser- und Kaltwasserleitung angeordneten Ventilen möglich ist. Mit solchen Absperrventilen in der Heißwasserleitung und der Kaltwasserleitung ist auch sichergestellt, dass kein Crossflow von dem Heißwasseranschluss zu dem Kaltwasseranschluss oder umgekehrt erfolgt. Sofern eine Mengeneinstellung für das Mischwasser gewünscht ist, so kann die Mengeneinstellung durch eine entsprechende Einheit stromab der Absperrventile in der Kaltwasserleitung und/oder Heißwasserleitung erfolgen.

Bevorzugt ist vorgesehen, dass das erste Ventil und das zweite Ventil so gekoppelt sind, dass das erste Ventil und das zweite Ventil gleichzeitig zwischen der Öffnungsstellung und der Schließstellung umschaltbar sind. Durch eine solche Kopplung wird sichergestellt, dass in der Öffnungsstellung immer sowohl Kaltwasser als auch Heißwasser zu der Mischeinheit fließt, so dass eine Temperatur am Mischwasserauslass alleine von der Einstellung der Mischeinheit abhängt. Es ist also sichergestellt, dass sich das erste Ventil und das zweite Ventil gleichzeitig entweder in der Öffnungsstellung oder in der Schließstellung befinden.

Eine Kopplung der Ventile zur Sicherstellung der einheitlichen Stellung kann mechanisch oder elektronisch ausgebildet sein.

Erfindungsgemäß sind das erste Ventil und das zweite Ventil als mechanisch betätigbare Push-Ventile ausgebildet. Solche Push-Ventile können durch eine Druckbetätigung zwischen der Öffnungsstellung und der Schließstellung umgeschaltet werden. Hierzu weisen die Ventile jeweils einen Betätigungsansatz auf, der durch eine Druckbetätigung linear verschoben wird, wodurch eine Umschaltung zwischen der Öffnungsstellung und der Schließstellung erfolgt. Solche Push-Ventile sind im Bereich von Sanitärarmaturen an sich bekannt.

Zur mechanischen Kopplung der Push-Ventile kann vorgesehen sein, dass die beiden Push-Ventile mittels eines Betätigungselements verbunden sind. Das Betätigungselement ist bevorzugt fest mit den Betätigungsansätzen der Push-Ventile verbunden. Das Betätigungselement ist wiederum entweder unmittelbar oder durch geeignete weitere Bauteile linear bewegbar, so dass durch eine Druckbetätigung des Betätigungselements beide Push-Ventile gleichzeitig umgeschaltet werden.

Mit der erfindungsgemäßen Sanitärarmatur ist es auch möglich, dass stromauf vor dem ersten Ventil kein Rückschlagventil in der Kaltwasserleitung und stromauf vor dem zweiten Ventil kein Rückschlagventil in der Heißwasserleitung angeordnet ist.

Prinzipiell wäre es möglich, wenn die Mischeinheit als Einhebel-Mischkartusche ausgebildet ist. In diesem Fall müssten zum Freigeben des Wasserflusses aber sowohl die beiden Ventile in der Heiß- und Kaltwasserleitung als auch die Einhebel-Mischkartusche betätigt werden. Bevorzugt ist daher, dass die Mischeinheit als reine Mischeinheit ausgebildet ist, mit der die Temperatur des Mischwassers eingestellt werden kann.

Bevorzugt ist die Mischeinheit als Thermostatkartusche zur Einstellung einer Mischwassertemperatur ausgebildet. Mit einer solchen Thermostatkartusche wird die Mischwassertemperatur auf die von einem Benutzer einstellbare Mischwassertemperatur geregelt. Eine Thermostatkartusche weist in der Regel ein Dehnstoffelement auf, welches von dem Mischwasser umflossen wird.

In einer bevorzugten Ausführungsform umfasst die Sanitärarmatur bevorzugt einen einteiligen, beispielsweise durch Druckguss hergestellten Armaturenkörper, in dem die Kaltwasserleitung, die Heißwasserleitung sowie eine von der Mischeinheit zu einem Mischwasserauslass führende Mischwasserleitung ausgebildet sind, wobei in dem Armaturenkörper die Ventile und die Mischeinheit angeordnet sind.

Die Erfindung sowie das technische Umfeld werden im Folgenden anhand der Figuren beispielhaft erläutert. Es zeigen schematisch
Figur 1: eine Schnittansicht durch eine erste Ausführungsform einer Sanitärarmatur, die nicht von dem unabhängigen Anspruch 1 umfasst ist,
Figur 2: eine Explosionsansicht der Sanitärarmatur der Figur 1,
Figur 3: eine Explosionsansicht einer erfindungsgemäßen Ausführungsform einer Sanitärarmatur,
Figur 4: eine Schnittansicht durch einen Teilbereich der Sanitärarmatur der Figur 3 mit den Ventilen in einer Schließstellung und
Figur 5: die Schnittansicht gemäß Figur 4 mit den Ventilen in einer Öffnungsstellung.

Die in den Figuren dargestellten Sanitärarmaturen umfassen einen Armaturenkörper 9 mit einem Kaltwasseranschluss 1 und einem Heißwasseranschluss 2.

Der Armaturenkörper 9 weist Aufnahmen für ein erstes Ventil 6, ein zweites Ventil 7 und eine Mischeinheit 3 auf.

In dem Armaturenkörper 9 ist eine von dem Kaltwasseranschluss 1 zu der Aufnahme für die Mischeinheit 3 führende Kaltwasserleitung 4 ausgebildet. Zudem ist in dem Armaturenkörper 9 eine von dem Heißwasseranschluss 2 zu der Aufnahme für die Mischeinheit 3 führende Heißwasserleitung 5 ausgebildet.

In der Kaltwasserleitung 4 ist das erste Ventil 6 und in der Heißwasserleitung 5 ist das zweite Ventil 7 angeordnet.

In dem Armaturenkörper 9 ist zudem eine Mischwasserleitung 11 ausgebildet, die von der Aufnahme für die Mischeinheit 3 zu einem Mischwasserauslass 10 führt.

Das erste Ventil 6 und das zweite Ventil 7 sind so ausgebildet, dass sie ausschließlich zwischen einer Öffnungsstellung zur Freigabe der entsprechenden Leitung und einer Schließstellung zum Absperren der entsprechenden Leitung umschaltbar sind.

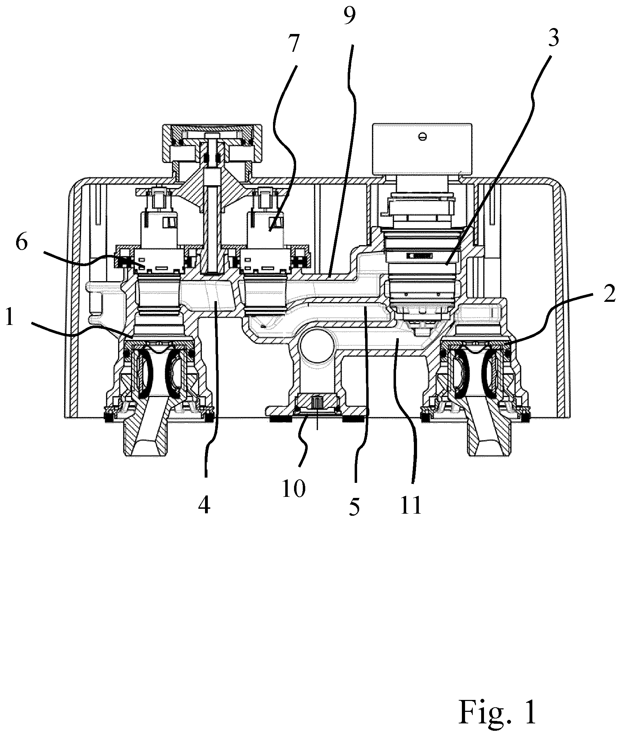

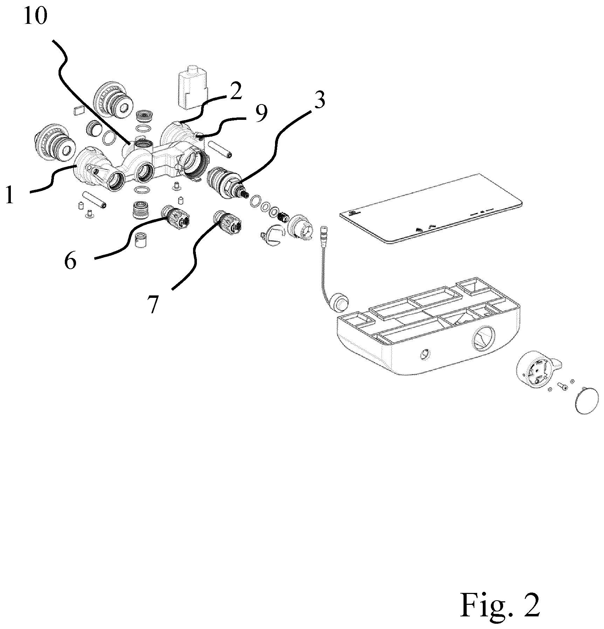

Gemäß dem Ausführungsbeispiel der Figuren 1 und 2, welches nicht von dem unabhängigen Anspruch 1 umfasst ist, sind das erste Ventil 6 und das zweite Ventil 7 jeweils als Magnetventil ausgebildet, welche elektronisch betätigbar sind. Die entsprechende elektronische Steuerung ist dabei so eingerichtet, dass das erste Ventil 6 und das zweite Ventil 7 immer gleichzeitig entweder geöffnet oder geschlossen sind.

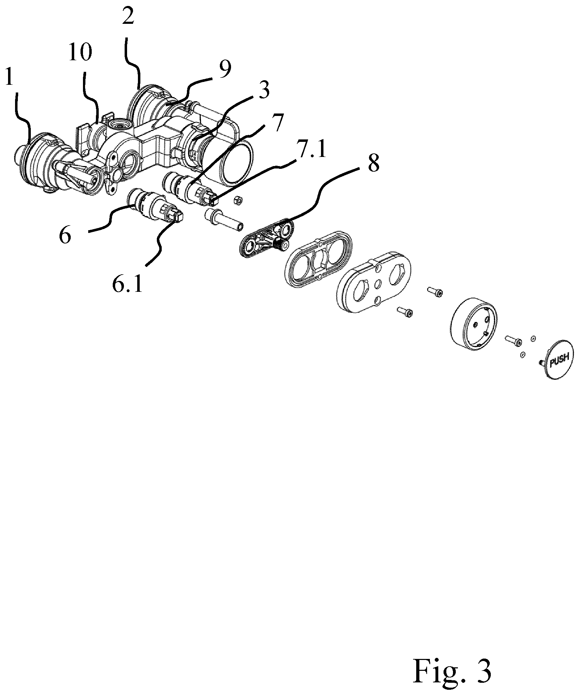

Gemäß der Sanitärarmatur der Figuren 3 bis 5 sind das erste Ventil 6 und das zweite Ventil 7 als Push-Ventile ausgebildet, die jeweils einen Betätigungsansatz 6.1 und 7.1 aufweisen. Die Betätigungsansätze 6.1 und 7.1 sind mit einem Betätigungselement 8 fest miteinander verbunden, so dass die beiden Push-Ventile 6, 7 nur gemeinsam durch eine lineare Verschiebung des Betätigungselements 8 zwischen der Öffnungsstellung und der Schließstellung umgeschaltet werden können.

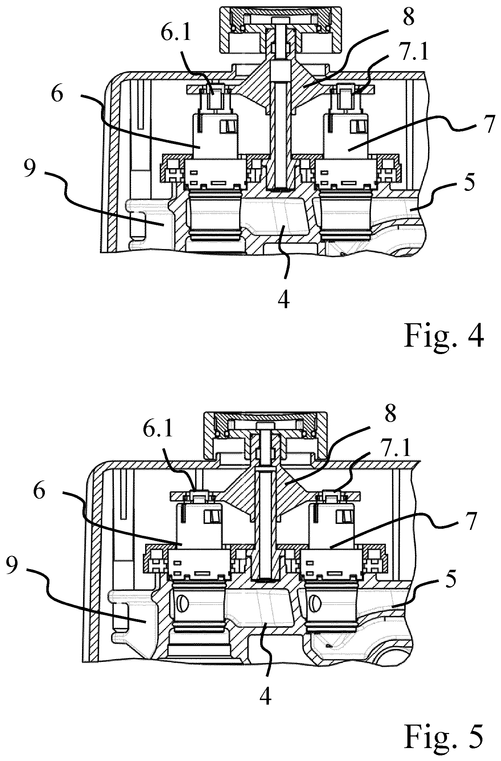

In der in Figur 4 dargestellten Stellung sind die Push-Ventile 6 und 7 geschlossen. Durch eine lineare Verschiebung des Betätigungselements 8 mittels einer Druckbetätigung des Betätigungsknopfes können die Push-Ventile 6, 7 geöffnet werden, wobei die Öffnungsstellung in der Figur 5 dargestellt ist.

Die Mischeinheit 3 ist als Thermostatkartusche ausgebildet, so dass eine Mischwassertemperatur alleine über die Mischeinheit 3 einstellbar ist, während der Wasserfluss durch Betätigung des ersten und zweiten Ventils 6, 7 ausgelöst beziehungsweise gestoppt werden kann. Eine Mengeneinstellung ist hingegen nicht vorgesehen.

### Bezugszeichenliste

- 1: Kaltwasseranschluss
- 2: Heißwasseranschluss
- 3: Mischeinheit
- 4: Kaltwasserleitung
- 5: Heißwasserleitung
- 6: erstes Ventil
- 6.1: Betätigungsansatz
- 7: zweites Ventil
- 7.1: Betätigungsansatz
- 8: Betätigungselement
- 9: Armaturenkörper
- 10: Mischwasserauslass
- 11: Mischwasserleitung

## Patentansprüche

1. Sanitärarmatur mit
- einem Kaltwasseranschluss (1),
- einem Heißwasseranschluss (2),
- einer Mischeinheit (3),
- einer von dem Kaltwasseranschluss (1) zu der Mischeinheit (3) führenden Kaltwasserleitung (4),
- einer von dem Heißwasseranschluss (2) zu der Mischeinheit (3) führenden Heißwasserleitung (5),
- einem in der Kaltwasserleitung (4) angeordneten ersten Ventil (6) und
- einem in der Heißwasserleitung (5) angeordneten zweiten Ventil (7),
wobei sowohl das erste Ventil (6) als auch das zweite Ventil (7) ausschließlich zwischen einer Öffnungsstellung und einer Schließstellung umschaltbar ist,
**dadurch gekennzeichnet, dass**
das erste Ventil (6) und das zweite Ventil (7) als mechanisch betätigbare Push-Ventile ausgebildet sind.

2. Sanitärarmatur nach Anspruch 1, wobei das erste Ventil (6) und das zweite Ventil (7) so gekoppelt sind, dass das erste Ventil (6) und das zweite Ventil (7) gleichzeitig zwischen der Öffnungsstellung und der Schließstellung umschaltbar sind.

3. Sanitärarmatur nach Anspruch 2, wobei das erste Ventil (6) und das zweite Ventil (7) mechanisch oder elektronisch gekoppelt sind.

4. Sanitärarmatur nach einem der vorhergehenden Ansprüche, wobei Betätigungsansätze (6.1, 7.1) der beiden Push-Ventile mechanisch mittels eines Betätigungselements (8) verbunden sind.

5. Sanitärarmatur nach einem der vorhergehenden Ansprüche, wobei in der Kaltwasserleitung (4) stromauf vor dem ersten Ventil (6) kein Rückschlagventil angeordnet ist.

6. Sanitärarmatur nach einem der vorhergehenden Ansprüche, wobei in der Heißwasserleitung (5) stromauf vor dem zweiten Ventil (7) kein Rückschlagventil angeordnet ist.

7. Sanitärarmatur nach einem der vorhergehenden Ansprüche, wobei die Mischeinheit (3) als Thermostatkartusche zur Einstellung einer Mischwassertemperatur ausgebildet ist.

8. Sanitärarmatur nach einem der vorhergehenden Ansprüche, wobei die Ventile (6, 7) und die Mischeinheit (3) in einem Armaturenkörper (9) angeordnet sind, in dem auch die Kaltwasserleitung (4), die Heißwasserleitung (5) und eine von der Mischeinheit (3) zu einem Mischwasserauslass (10) führende Mischwasserleitung (11) ausgebildet sind.

## Claims

1. Sanitary fitting having
- a cold water connection (1),
- a hot water connection (2),
- a mixing unit (3),
- a cold water pipeline (4) leading from the cold water connection (1) to the mixing unit (3),
- a hot water pipeline (5) leading from the hot water connection (2) to the mixing unit (3),
- a first valve (6) arranged in the cold water pipeline (4) and
- a second valve (7) arranged in the hot water pipeline (5),
wherein both the first valve (6) and the second valve (7) is exclusively switchable between an opening position and a closing position,
**characterised in that**
the first valve (6) and the second valve (7) are designed as mechanically operative push valves.

2. Sanitary fitting according to claim 1, wherein the first valve (6) and the second valve (7) are connected in such a way that the first valve (6) and the second valve (7) are simultaneously switchable between the opening position and the closing position.

3. Sanitary fitting according to claim 2, wherein the first valve (6) and the second valve (7) are mechanically or electronically coupled.

4. Sanitary fitting according to any one of the preceding claims, wherein actuation projections (6.1, 7.1) of the two push valves are mechanically connected by means of an actuating element (8).

5. Sanitary fitting according to any one of the preceding claims, wherein a check valve is not arranged upstream in the cold water pipeline (4), before the first valve (6).

6. Sanitary fitting according to any one of the preceding claims, wherein a check valve is not arranged upstream in the hot water pipeline (5), before the second valve (7).

7. Sanitary fitting according to any one of the preceding claims, wherein the mixing unit (3) is designed as a thermostat cartridge for adjusting a mixed water temperature.

8. Sanitary fitting according to any one of the preceding claims, wherein the valves (6, 7) and the mixing unit (3) are arranged in a fitting body (9) in which the cold water pipeline (4), the hot water pipeline (5) and a mixed water pipeline (11) leading from the mixing unit (3) to a mixed water outlet (10) are configured.

## Revendications

1. Robinetterie sanitaire, comprenant
- un raccordement d'eau froide (1),
- un raccordement d'eau chaude (2),
- une unité mélangeuse (3),
- une conduite d'eau froide (4), menant du raccordement d'eau froide (1) vers l'unité mélangeuse (3),
- une conduite d'eau chaude (5), menant du raccordement d'eau chaude (2) vers l'unité mélangeuse (3),
- une première valve (6), placée dans la conduite d'eau froide (4) et
- une deuxième valve (7), placée dans la conduite d'eau chaude (5),
aussi bien la première valve (6) qu'également la deuxième valve (7) étant commutables exclusivement entre une position d'ouverture et une position de fermeture,
**caractérisée en ce que**
la première valve (6) et la deuxième valve (7) sont conçues sous la forme de valves à poussoir à actionnement mécanique.

2. Robinetterie sanitaire selon la revendication 1, la première valve (6) et la deuxième valve (7) étant couplées de sorte que la première valve (6) et la deuxième valve (7) soient commutables simultanément entre la position d'ouverture et la position de fermeture.

3. Robinetterie sanitaire selon la revendication 2, la première valve (6) et la deuxième valve (7) étant couplées mécaniquement ou électroniquement.

4. Robinetterie sanitaire selon l'une quelconque des revendications précédentes, des embouts d'actionnement (6.1, 7.1) des deux valves à poussoir étant reliés mécaniquement au moyen d'un élément d'actionnement (8).

5. Robinetterie sanitaire selon l'une quelconque des revendications précédentes, dans la conduite d'eau froide (4) n'étant placé aucun clapet antiretour en amont de la première valve (6) .

6. Robinetterie sanitaire selon l'une quelconque des revendications précédentes, dans la conduite d'eau chaude (5) n'étant placé aucun clapet antiretour en amont de la deuxième valve (7).

7. Robinetterie sanitaire selon l'une quelconque des revendications précédentes, l'unité mélangeuse (3) étant conçue sous la forme d'une cartouche thermostatique, pour le réglage d'une température d'eau mitigée.

8. Robinetterie sanitaire selon l'une quelconque des revendications précédentes, les valves (6, 7) et l'unité mélangeuse (3) étant placées dans un corps de robinetterie (9), dans lequel sont également conçues la conduite d'eau froide (4), la conduite d'eau chaude (5) et une conduite d'eau mitigée (11), menant de l'unité mélangeuse (3) vers une sortie d'eau mitigée (10).
